# FASCICULE DE BREVET EUROPEEN

(11) **EP 3 280 576 B1**
(45) Date de publication et mention de la délivrance du brevet: **07.07.2021**
(21) Numéro de dépôt: 16718245.0
(22) Date de dépôt: 07.04.2016
(51) Int. Cl.: B28B 11/04, B29C 44/18

(54) **PROCÉDÉ DE PRODUCTION DE BLOCS ISOLÉS POUR LA CONSTRUCTION DE MUR**
VERFAHREN ZUR HERSTELLUNG ISOLIERTER BLÖCKE FÜR GEBÄUDEWÄNDE
METHOD FOR PRODUCING INSULATED BLOCKS FOR BUILDING WALLS

(30) Priorité: 10.04.2015 FR 1553147
(43) Date de publication de la demande: 14.02.2018
(73) Titulaire: Thermimur Distribution SAS, 69330 Meyzieu (FR)
(72) Inventeur: GUICHERD, Josselin, 38080 Saint Marcel (FR)
(74) Mandataire: Decorchemont, Audrey Véronique Christèle
(86) Numéro de dépôt international: PCT/EP2016/057666
(87) Numéro de publication internationale: WO 2016/162443

(56) Documents cités:
- WO-A1-2009/106402
- WO-A1-2015/007450
- CN-A- 102 431 079
- CN-A- 103 786 300
- FR-A1- 2 555 637
- US-A- 4 275 539

## Description

### ARRIERE PLAN DE L'INVENTION

Il est connu d'isoler des murs en appliquant sur une face de ces murs, un complexe isolant formé d'une couche d'isolant de type mousse polyuréthane extrudé revêtue d'une couche de gypse servant de face de parement du complexe isolant. L'un des inconvénients de cette solution est que l'on doit réaliser l'isolation après avoir construit le mur, ce qui implique une augmentation des délais de construction.

FR 2 555 637 A1 divulgue un procédé et une chaîne de production de blocs isolés pour la construction de mur suivant le préambule des revendications 1 et 6.

### OBJET DE L'INVENTION

Un objet de la présente invention est de former des blocs isolés pour la construction de murs.

### RESUME DE L'INVENTION

A cet effet, il est proposé selon l'invention un procédé de production de blocs isolés pour la construction de mur suivant la revendication 1.

Lors de l'expansion de la mousse, cette dernière exerce des efforts importants sur les parois du bloc ce qui peut entrainer une fissuration / rupture / dégradation de ces parois. En appliquant des efforts de compression sur des parois de blocs pour s'opposer à des efforts d'expansion on réduit le risque de fissuration / rupture / dégradation de parois de blocs sous l'effet de la poussée de la mousse expansive. Les efforts les plus importants exercés par la mousse sur les parois apparaissent pendant l'expansion de cette mousse, une fois l'expansion de la mousse réalisée et la mousse solidifiée, les efforts exercés par cette mousse sur les parois sont alors moindres et on peut relâcher les efforts de compression exercés sur les blocs.

Les efforts de compression exercés sur les parois de blocs pendant l'expansion de la mousse permettent de minimiser le risque de fissuration de parois de blocs et permettent ainsi l'obtention de blocs isolés résistants et par conséquent adaptés à la construction de murs de bâtiment.

Pour la compréhension de l'invention, le terme bloc pour la construction de mur désigne une structure comprenant au moins deux parois reliées entre elles de manière rigide ou souples et définissant entre ces parois un évidement interne.

L'invention permet d'obtenir des blocs isolés thermiquement et présentant des parois de bloc d'autant plus résistantes qu'elles ne sont pas fragilisées par l'expansion de la mousse. Lors de l'expansion de la mousse, cette dernière exerce des efforts importants sur les parois du bloc ce qui peut entrainer une fissuration / rupture / dégradation de ces parois. En appliquant des efforts de compression sur des parois de blocs pour s'opposer à des efforts d'expansion on réduit le risque de fissuration / rupture / dégradation de parois de blocs sous l'effet de la poussée de la mousse expansive. Les efforts les plus importants exercés par la mousse sur les parois apparaissent pendant l'expansion de cette mousse, une fois l'expansion de la mousse réalisée et la mousse solidifiée, les efforts exercés par cette mousse sur les parois sont alors moindres et on peut relâcher les efforts de compression exercés sur les blocs.

Les efforts de compression exercés sur les parois de blocs pendant l'expansion de la mousse permettent de minimiser le risque de fissuration de parois de blocs et permettent ainsi l'obtention de blocs isolés résistants et par conséquent adaptés à la construction de murs de bâtiment.

Selon un mode de réalisation complémentaire du procédé de production de blocs selon l'invention, le procédé comprend aussi l'aspiration de gaz se trouvant à l'intérieur desdits évidements internes aux blocs où se trouve la mousse isolante expansive afin de favoriser l'expansion de la mousse isolante dans les évidements internes aux blocs où se trouve la mousse isolante.

Le fait d'introduire une mousse isolante expansive dans l'évidement formé entre des parois du bloc et d'y générer une dépression par aspiration de gaz favorise l'expansion de la mousse jusqu'à ce qu'elle vienne en contact contre ces parois délimitant l'évidement.

On réduit ainsi le risque d'avoir des zones de l'évidement exemptes de mousse tout en limitant la quantité massique de matériau isolant nécessaire pour former un volume de matériau isolant de forme complémentaire à l'évidement formé entre les parois du bloc.

Par ailleurs, en aspirant des gaz se trouvant à l'intérieur de l'évidement où se trouve la mousse expansive non encore solidifiée, on crée une dépression qui accélère la vitesse d'expansion de la mousse et on augmente la capacité d'expansion de la mousse pour mieux emplir l'évidement. La mousse introduite sous forme fluide a tendance, en s'expansant, à se coller contre les parois, une fois solidifiée, cette mousse crée des liaisons mécaniques entre ces parois et le bloc isolé est ainsi plus résistant mécaniquement que le bloc non isolé.

Le bloc isolé ainsi obtenu présente des caractéristiques isolantes améliorées du fait que l'évidement est mieux rempli avec une moindre masse de mousse expansive.

L'accélération de la vitesse d'expansion du fait de l'aspiration de gaz permet également d'accélérer le processus de fabrication du bloc isolé.

Idéalement, lesdits efforts de compression orientés pour s'opposer à des efforts d'expansion sont appliqués au moins pendant l'aspiration de gaz se trouvant à l'intérieur desdits évidements internes.

Il est à noter que dans certains modes ne faisant pas partie de l'invention où les parois des blocs sont suffisamment résistantes pour ne pas risquer de fissurer sous des efforts d'expansion, on peut faire en sorte de mettre en œuvre ladite aspiration de gaz se trouvant à l'intérieur desdits évidements internes aux blocs où se trouve la mousse isolante expansive sans qu'il y ait d'application d'efforts de compression orientés pour s'opposer à aux efforts d'expansion.

Dans tous les modes de réalisation de l'invention dans lesquels on met en œuvre l'aspiration, on préfère que cette aspiration résulte en une mise en dépression à au moins 0.5 bar, et préférentiellement au moins 0.7 bar en dessous de la pression atmosphérique ambiante à l'extérieur de l'enceinte.

Selon un autre aspect, l'invention porte sur une chaîne de production de blocs isolés pour la construction de mur suivant la revendication 6.

Cette chaîne de production permet de mettre en contrainte les blocs pour limiter un risque de fissuration de parois. Dans ce mode de réalisation la chaîne ne présente pas forcément de moyens d'aspiration de gaz pour aspirer des gaz se trouvant à l'intérieur de ladite première enceinte.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

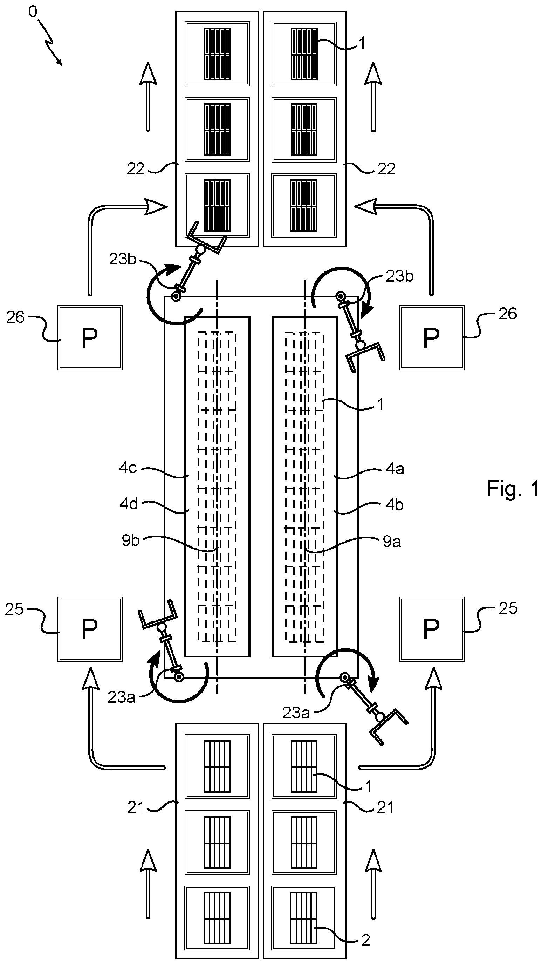

- la figure 1 présente une vue de dessus d'une chaîne de production de blocs isolés conforme à l'invention ;

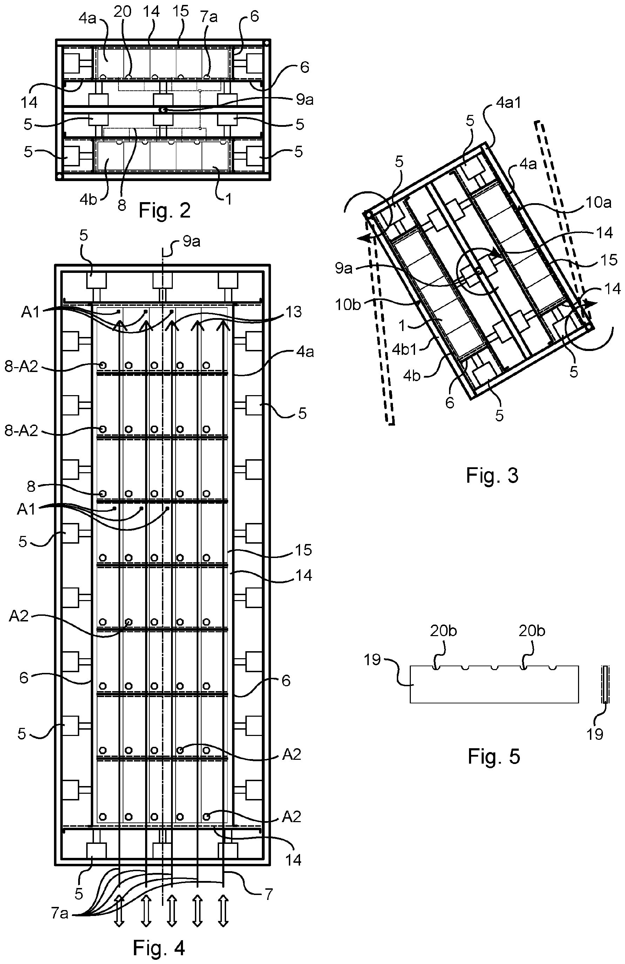

- la figure 2 présente une vue arrière de première et seconde enceintes de la chaîne de production qui sont fermées, chacune de ces enceintes contenant plusieurs blocs isolés ou en attente d'être isolés ;
- la figure 3 est une vue arrière des première et seconde enceintes de la figure 1, on voit sur cette figure que ces première et seconde enceintes sont montées mobiles pour pouvoir être retournées afin de faciliter le remplissage des évidements des blocs par de la mousse et que chacune de ces enceintes présentent chacune une ouverture et une porte pour sélectivement obturer l'ouverture d'enceinte ;
- la figure 4 est une vue de dessus d'une des enceintes de la chaîne de production selon l'invention, cette figure illustre l'usage de vérins placés à la périphérie de l'enceinte pour générer des **efforts de compression sur** des parois de blocs se trouvant dans cette première enceinte et ainsi s'opposer à des efforts d'expansion exercés contre des parois des blocs par la mousse en cours d'expansion ;
- la figure 5 présente une vue de face et une vue de côté d'une plaque de séparation prévue pour s'étendre entre des blocs adjacents entre eux et disposés dans l'enceinte prévue pour être dépressurisée, cette plaque de séparation permettant de limiter l'expansion de la mousse en dehors des évidements des blocs et de limiter le risque de coller des blocs entre eux par de la mousse solidifiée entre ces blocs adjacents ;

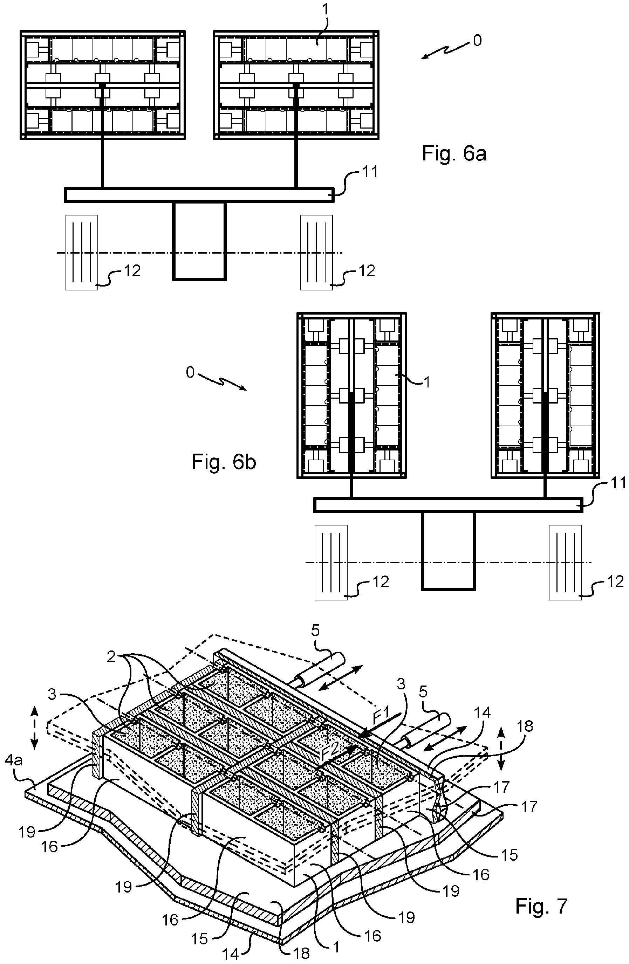

- la figure 6a est une vue arrière de la chaîne de production selon l'invention dans un mode où une remorque porte deux paires d'enceintes permettant chacune de recevoir des blocs pour y introduire de la mousse et ainsi les isoler, sur cette figure, les deux paires d'enceintes sont positionnées pour permettre la production de blocs isolés ;
- la figure 6b et une vue identique à celle de la figure 6a mais ici les deux paires d'enceintes sont positionnées pour permettre le transport de la chaîne de production par roulage de la remorque, les enceintes sont alors pivotées de manière que la chaîne présente alors une largeur inférieure à 2.55 m propre au transport routier ;
- la figure 7 représente plusieurs blocs placés dans une enceinte où leurs évidements sont remplis de mousse expansive isolante thermiquement, on voit sur cette figure une partie seulement de l'enceinte et en particulier une paroi périphérique de l'enceinte formant le fond de l'enceinte et une paroi périphérique de l'enceinte formant un côté de l'enceinte, les faces internes de ces parois périphériques sont souples et élastiques pour réaliser une étanchéité contre des faces externes 16 des blocs. Sur cette figure, on voit également que des plaques de séparation 19 sont placées entre des faces externes 16 des blocs pour éviter que de la mousse ne passe entre ces faces externes 16 de ces blocs.

### DESCRIPTION DETAILLEE DE L'INVENTION

Comme indiqué précédemment, l'invention concerne un procédé de production de blocs isolés 1 pour la construction de mur. Le procédé comprend la fabrication de blocs 1, chaque bloc ainsi fabriqué comportant des parois la, 1b entre lesquelles se trouve au moins un évidement interne 2 au bloc 1.

La fabrication / formation de ces parois 1a, 1b est réalisée par moulage d'un matériau moulable apte à se solidifier qui est préférentiellement du béton. En d'autres termes, les blocs 1 sont fabriqués par moulage de béton. Comme on le voit en particulier sur la figure 7 qui illustre plusieurs blocs 1, chaque bloc à la forme d'un parallélépipède rectangle doté d'au moins deux parois latérales et d'au moins deux parois de liaison transversales.

Ces deux parois latérales sont planes, allongées 1a, 1b et parallèles entre elles et sont reliées entre elles par des parois de liaison transversales s'étendant perpendiculairement aux parois latérales 1a, 1b qu'elles relient. Toutes ces parois sont écartées entre elles pour définir entre ces parois et à l'intérieur du bloc au moins un évidement interne au bloc 2. En l'occurrence, sur l'exemple de la figure 7, chaque bloc 1 présente deux évidements internes 2 ayant chacun une forme parallélépipédique. Ces blocs présentent tous une même géométrie.

Le procédé selon l'invention permet d'introduire dans ces évidements un isolant thermique pour diminuer le coefficient de transfert thermique entre les parois latérales 1a, 1b.

Lors de l'introduction de la mousse isolante expansive 3 dans les évidements internes 2 des blocs 1, on aspire des gaz se trouvant à l'intérieur desdits évidements internes 2 afin de favoriser l'expansion de la mousse isolante 3 dans les évidements internes 2. Cette aspiration de gaz génère une dépression dans les évidements et augmente la vitesse et la capacité d'expansion de la mousse. Ceci permet de minimiser le volume de mousse nécessaire à l'isolation tout en minimisant le risque d'avoir une partie d'évidement exempte d'isolant thermique expansé. Une fois expansée et solidifiée la mousse forme une masse d'isolant de forme complémentaire à l'évidement.

L'aspiration des gaz se trouvant à l'intérieur desdits évidements internes 2 aux blocs 1 est réalisée en disposant ces blocs 1 dans une enceinte dépressurisée 4a par rapport à une pression atmosphérique ambiante.

Pendant l'aspiration des gaz, on applique des efforts de compression F1 sur certaines au moins des parois la, 1b des blocs 1. Ces efforts de compression F1 sont orientés pour s'opposer à des efforts d'expansion F2 exercés par la mousse isolante expansive 3 contre des parois 1a, 1b des blocs. Comme lors de son expansion et avant sa solidification, la mousse exerce une poussée importante, il y a un risque de fragilisation des parois des blocs. Pour réduire ce risque, on équilibre les forces auxquelles sont soumises ces parois en exerçant des efforts de compression F1 symbolisés sur la figure 7. Comme on le verra par la suite la génération des efforts de compression F1 se fait grâce à des parois d'enceinte qui son mobiles et viennent en appui contre des faces externes 16 de blocs placés dans l'enceinte mise en dépression.

Plus précisément, les efforts de compression F1 appliqués sur certaines au moins des parois 1a, 1b des blocs 1 pendant l'aspiration de gaz sont appliqués à l'aide de vérins 5 fixés sur des parois mobiles 6 de l'enceinte dépressurisée.

Pour mettre en œuvre ce procédé, on utilise une chaîne de production 0 de blocs isolés 1 pour la construction de mur. Cette chaîne est illustrée par la vue d'ensemble de la figure 1.

La chaîne 0 comprend :
- au moins une première enceinte 4a adaptée à être dépressurisée par rapport à une pression atmosphérique ambiante, cette première enceinte 4a reçoit, à l'intérieur de l'enceinte, des blocs 1 du type décrit ci-avant qui comportent chacun des parois 1a, 1b et au moins un évidement interne 2 au bloc 1 ;
- des premiers moyens d'injection 7 adaptés à introduire une mousse isolante expansive 3 dans les évidements internes 2 de blocs 1 disposés à l'intérieur de ladite première enceinte 4a ; et
- des premiers moyens d'aspiration 8 de gaz adaptés à aspirer des gaz se trouvant à l'intérieur de ladite première enceinte 4a.

Des premiers moyens de compression 5 sont reliés à la première enceinte 4a et agencés pour pouvoir sélectivement comprimer des parois 1a, 1b de blocs 1 disposés dans la première enceinte 4a.

Un premier axe de pivotement préférentiellement sensiblement horizontal 9a est relié à ladite première enceinte 4a de manière à ce que cette première enceinte 4a puisse être pivotée selon ce premier axe de pivotement 9a.

Les premiers moyens d'injection comportent des buses 13 qui en fonction du pivotement choisi de la chambre selon le premier axe de pivotement, se trouvent soit placés au niveau d'une partie basse de la première enceinte si aucune injection de mousse n'est souhaitée, soit au niveau d'une partie haute de la première enceinte si l'on souhaite injecter de la mousse en s'aidant de la gravité. Le fait d'injecter de la mousse depuis une partie haute de l'enceinte permet à la mousse de s'écouler par gravité depuis la buse en s'écartant de cette dernière, ce qui limite le risque de son obturation par de la mousse.

Typiquement, on fait en sorte d'injecter la mousse dans chaque évidement des blocs depuis un niveau haut de l'enceinte / zone interne supérieure de manière à ce que, d'une part la mousse s'éloigne par gravité du moyen d'injection introduisant la mousse dans l'enceinte et que d'autre part la mousse s'écoule d'abord dans un angle A1 de l'évidement. Cet angle A1 est le plus éloigné d'un point d'aspiration A2 d'un premier moyen d'aspiration de gaz situés dans cet évidement. Ainsi, comme la mousse commence à s'expanser dans l'évidement depuis son angle A1, elle termine son expansion dans l'évidement au niveau d'une zone de l'évidement qui est la plus proche du point d'aspiration A2 correspondant à cet évidement.

Idéalement, on fait en sorte d'avoir autant de points d'aspiration que l'on a d'évidement de blocs présents dans l'enceinte. Ceci permet de contrôler, évidement par évidement, l'expansion de la mousse dans les différents blocs contenus dans l'enceinte.

Pour cela, et pour toute enceinte donnée, les moyens d'aspiration comportent au moins un point d'aspiration A2 en face de chaque évidement des blocs placés dans l'enceinte.

Comme illustré à la figue 2, les moyens d'aspiration 8 comportent des conduites reliant les points d'aspiration A2 à au moins une pompe à vide non représentée.

Dans un mode préférentiel, chaque point d'aspiration A2 est doté de moyens pour mesurer la pression régnant dans un évidement correspondant ce qui permet d'évaluer d'une part le niveau d'aspiration de gaz dans cet évidement et d'autre part le taux d'expansion de la mousse introduite dans cet évidement. On peut ainsi déduire évidement par évidement si la mousse s'est correctement expansée pour occuper tout l'évidement ou si au contraire on a un défaut d'expansion.

Dans un mode particulier, certains au moins des points d'aspiration A2 peuvent être pourvus de moyens d'obturation, tels que des clapets, pour empêcher la pénétration de mousse expansive dans le point d'aspiration A2.

Les premiers moyens d'injection 7 comportent des buses mobiles 13 à l'intérieur de la première enceinte 4a pour y introduire depuis la zone interne supérieure de la première enceinte 4a vers les évidements internes 2 de blocs 1 placés en dessous de ladite zone interne supérieure, des composants chimiques séparés l'un de l'autre qui lorsque mélangés forment ladite mousse isolante expansive. La mousse expansive peut être une mousse polyuréthane. Les composants chimiques pouvant être introduits contiennent par exemple des polyisocyanates et/ou des polyols. Bien entendu d'autres types de composés peuvent être introduits sous forme séparée ou non, dans la mesure où ils forment un matériau isolant s'expansant dans l'évidement du bloc.

Comme les blocs sont rangés dans l'enceinte par rangs de blocs alignés, chaque buse est disposée pour introduire de la mousse dans les évidements d'un rang des rangs de blocs.

Idéalement, la première enceinte 4a comporte des parois périphériques 14 dont des faces internes 15 sont orientées vers l'intérieur de cette première enceinte 4a pour venir en contact contre des faces externes 16 de blocs 1 qui se trouvent dans cette première enceinte 4a. Certaines au moins de ces faces internes 15 des parois périphériques 14 de la première enceinte 4a comportent un premier matériau élastique et compressible 17 qui lorsque compressé contre une face externe 16 d'un bloc 1 s'oppose au passage de mousse expansive 3 entre cette face interne de paroi périphérique 15 de la première enceinte 4a et la face externe 16 du bloc 1 contre laquelle ce premier matériau élastique 17 est compressé.

On limite ainsi le risque qu'après expansion de la mousse on ait de la mousse solidifiée sur les faces externes 16 des blocs qui sont en vis-à-vis des parois périphériques de la chambre.

Le matériau élastique 17 est formé d'au moins une couche de matériau élastomère, tel que du caoutchouc, revêtue d'une couche de parement 18 placée en vis-à-vis de l'intérieur de cette première enceinte 4a. Cette couche de parement 18 est en une matière sur laquelle la mousse isolante expansive 3 n'adhère pas telle que du polyéthylène ou du PTFE.

La chaîne de production comprend plusieurs enceintes 4a, 4b, 4c, 4d qui sont identiques entre elles et qui sont conformes à la description réalisée en référence à la première enceinte 4a.

La deuxième enceinte 4b est par conséquent adaptée à être dépressurisée par rapport à une pression atmosphérique ambiante et également adaptée à recevoir des blocs 1. Les première et deuxième enceintes 4a, 4b sont montées à rotation selon ledit premier axe de pivotement 9a, ces première et deuxième enceintes 4a, 4b formant un premier groupe d'enceintes.

Les troisième et quatrième enceintes 4c, 4d qui sont aussi identiques à la première enceinte 4a sont aussi respectivement adaptées à être dépressurisées par rapport à une pression atmosphérique ambiante et également adaptées à recevoir des blocs 1. Ces troisième et quatrième enceintes 4c, 4d sont montées à rotation selon un second axe de pivotement 9b qui est sensiblement horizontal, c'est-à-dire horizontal à +/-15°. Ces troisième et quatrième enceintes 4c, 4d forment un second groupe d'enceintes.

Dans une première configuration, le premier groupe d'enceintes est pivoté selon ledit premier axe de pivotement 9a de manière à ce que la première enceinte soit placée au-dessus de la deuxième enceinte et de manière à permettre un accès à l'intérieur de cette première enceinte via une ouverture 10a de cette première enceinte 4a se trouvant alors au-dessus de cette deuxième enceinte.

Dans une seconde configuration, le premier groupe d'enceintes est pivoté selon ledit premier axe de pivotement 9a de manière à ce que la deuxième enceinte 4b soit placée au-dessus de la première enceinte 4a et de manière à permettre un accès à l'intérieur de cette deuxième enceinte 4b via une ouverture 10b de cette deuxième enceinte 4b se trouvant alors au-dessus de cette première enceinte.

Le second groupe d'enceintes est aussi adapté à adopter des première et seconde configurations dont les descriptions sont identiques à ce qui vient d'être expliqué à la différence que le terme première enceinte 4a doit être remplacé par troisième enceinte 4c, que le terme deuxième enceinte 4b doit être remplacé par le terme quatrième enceinte 4d et le terme premier axe de pivotement doit être remplacé par le terme second axe de pivotement 9b.

L'ouverture 10a de la première enceinte 4a est sélectivement obturée par une porte 4a1 de la première enceinte mobile entre une position de fermeture et une position d'ouverture.

L'ouverture 10b de la deuxième enceinte 4b est sélectivement obturée par une porte 4b1 de la deuxième enceinte 4b mobile entre une position de fermeture et une position d'ouverture. A la figure 3, les portes 4a1 et 4b1 sont illustrées en traits pleins dans leurs positions de fermeture respectives et en traits pointillés alors qu'elles passent de leurs positions de fermeture vers leurs positions d'ouverture.

Les ouvertures des troisième et quatrième enceintes sont aussi sélectivement obturées par des portes de ces enceintes, chacune de ces portes étant également mobile entre une position de fermeture rendant l'enceinte étanche et une position d'ouverture autorisant l'accès aux blocs situés dans l'enceinte.

Comme on le voit sur la figure 3 qui illustre le premier groupe d'enceintes formé par les première et deuxième enceintes, chaque porte est articulée sur un de ses bords pour s'écarter de l'ouverture et ainsi permettre l'accès aux blocs ou au contraire pour se plaquer contre l'ouverture pour obturer l'enceinte de manière étanche et permettre sa dépressurisation. Chacune des portes est déplacée par des actionneurs commandés par automate qui sera présenté ci-après.

Les première et deuxième enceintes sont distinctes l'une de l'autre de manière à pouvoir être dépressurisées, ouvertes, fermées indépendamment l'une de l'autre.

Cette description propre au premier groupe d'enceintes s'applique également au second groupe d'enceintes.

Dans un mode de réalisation préférentiel la chaîne comporte une remorque 11 dotée de roues 12. Cette remorque porte au moins :
- la première enceinte 4a ;
- les premiers moyens d'injection 7 ; et
   - les premiers moyens d'aspiration 8 de gaz adaptés à aspirer des gaz se trouvant à l'intérieur de ladite première enceinte 4a.
L'usage d'une telle remorque permet de déplacer la chaîne de production 0 d'un site de production de blocs à un autre pour pouvoir y réaliser des opérations d'isolation de blocs à l'aide d'une seule et même chaîne. Ceci permet de répartir les investissements liés à l'isolation de blocs entre plusieurs sites de production ce qui est particulièrement économique et intéressant pour réduire le coût de fabrication des blocs isolés.

Comme on le voit en particulier sur les figures 6a et 6b, la remorque 11 porte également la deuxième enceinte 4b et ledit premier axe de pivotement 9a ainsi que les troisième et quatrième enceintes et le second axe de pivotement 9b.

Pour limiter le risque que de la mousse ne s'écoule et s'attache contre des faces externes 16 des blocs, on peut aussi prévoir de placer dans chaque enceinte et entre des faces externes 16 de blocs 1 adjacents entre eux, des plaques de séparation 19. Chaque plaque de séparation 19 comporte un matériau élastique et compressible qui lorsque compressé entre deux faces externes 16 de deux blocs adjacents 1 s'oppose au passage de mousse expansive entre ces faces externes 16 de ces blocs adjacents.

Le matériau élastique composant une plaque de séparation 19 est préférentiellement formé d'un matériau élastomère revêtu extérieurement par une couche de matériau sur lequel la mousse expansive n'adhère pas, tel que du polyéthylène ou du PTFE.

Comme on le voit en particulier sur les figures 2 et 4 les moyens d'injection 7 présentent plusieurs conduites 7a présentant chacune une extrémité reliée à une buse 13 correspondante. Chaque conduite 7a est conçue pour acheminer vers au moins une buse, sans les mélanger, des composants fluides nécessaires à la formation de la mousse expansive. Chaque buse est adaptée à mélanger ces composants au moins au moment de l'introduction dans l'enceinte. Chacune de ces conduites 7a est montée coulissante le long d'un axe de coulissement qui lui est propre de manière à permettre le déplacement des buses mobiles à l'intérieur de l'enceinte correspondante.

On peut prévoir que chaque bloc 1 présente une ou plusieurs encoches pour permettre le passage de buse 13 et que certaines au moins des plaques de séparation 19 présentent aussi une ou plusieurs encoches pour permettre un passage de buse 13. Ces encoches 20 des blocs et des plaques de séparation 19 sont disposées pour que lorsque les blocs 1 sont placés dans l'enceinte avec des plaques de séparations 19 disposées pour écarter des blocs adjacents 1 les uns des autres, on ait alors au moins un alignement d'encoches 20 formées dans des blocs et d'encoches 20b formées dans des plaques de séparation 19 de manière à permettre le passage de buse 13 au travers de ces encoches 20 ainsi alignées.

On note que la description faite de la première enceinte vaut pour toutes les autres enceintes car ces enceintes sont structurellement identiques entre elles.

Chacune des première, deuxième, troisième et quatrième enceintes reçoit des moyens d'injection identiques aux premiers moyens d'injection 7.

Chaque enceinte est adaptée à être dépressurisée par rapport à une pression atmosphérique ambiante indépendamment des autres enceintes et chaque enceinte est adaptée à recevoir des blocs 1. L'accès à chaque enceinte donnée se fait par une ouverture propre à cette enceinte donnée, cette ouverture étant adaptée à être sélectivement ouverte ou obturée via une porte propre à l'enceinte donnée.

Chaque enceinte donnée est équipée de moyens de compression reliés à cette enceinte donnée et agencés pour pouvoir comprimer des parois de blocs disposés à l'intérieur de cette enceinte donnée.

En l'occurrence, chaque enceinte donnée présente un volume de réception de blocs à l'intérieur de cette enceinte donnée qui est de forme parallélépipédique. Les parois périphériques 14 de cette enceinte qui délimitent la forme parallélépipédique sont opposées deux à deux et sont mobiles l'une par rapport à l'autre pour pouvoir compresser sélectivement des blocs placés dans cette enceinte.

Pour cela, chaque enceinte est équipée de ses propres moyens de compression 5, en l'occurrence des vérins 5, qui sont chacun agencés pour déplacer une des parois périphérique 14 de l'enceinte donnée. Ainsi, comme on le voit sur la figure 3 la paroi périphérique de l'enceinte qui est en vis-à-vis de l'ouverture de l'enceinte constitue un fond d'enceinte qui est mobile perpendiculairement à cette paroi sous l'effet de vérins 5. D'autres parois de cette enceinte forment des côtés de l'enceinte. Deux côtés sont fixes et deux autres en vis-à-vis des côtés fixes sont mobiles sous l'effet de vérin de côtés 5.

De même chaque enceinte donnée est associée à des moyens d'aspiration de gaz adaptés à aspirer des gaz dans cette enceinte donnée pour la mettre en dépression.

Les moyens d'aspiration, de compression, d'injection associés aux différentes enceintes sont commandés via un automate régulant pour chaque enceinte son ouverture, sa fermeture, la pression à l'intérieur de l'enceinte, l'injection de mousse, les efforts de compression appliqués sur des faces extérieurs de blocs et le déplacement des buses d'injection dans l'enceinte.

Cet automate est programmé pour avoir, une enceinte ouverte afin de pouvoir la remplir ou la vider de blocs alors qu'une autre enceinte est fermée et mise en dépression pour pouvoir y admettre de la mousse et l'expanser.

Comme indiqué ci-avant, les enceintes sont réparties en plusieurs groupes d'enceintes. Chaque groupe est constitué d'au moins deux enceintes liées entre elles et montées à rotation selon un axe de pivotement sensiblement horizontal, chaque groupe d'enceintes étant ainsi pivoté selon un axe horizontal qui lui est propre.

En l'occurrence, chaque groupe d'enceintes est formé de deux enceintes montées à rotation selon un axe de pivotement 9a. Le pivotement permet d'introduire de la mousse par gravité depuis une paroi périphérique de l'enceinte puis, après avoir retourné l'enceinte, d'extraire les blocs isolés depuis une autre paroi périphérique de l'enceinte qui est dotée d'une porte. On peut ainsi travailler en temps masqué entre les enceintes d'un même groupe d'enceintes ce qui accélère la capacité de production de la chaîne de production 0.

Comme on le voit sur la figure 1, les opérations de remplissage des enceintes 4a, 4b, 4c, 4d en blocs 1 et de vidage de ces enceintes 4a, 4b, 4c, 4d sont réalisées par des bras robotisés 23a, 23b. Ces bras robotisés 23a, 23b sont au nombre de deux par groupe d'enceintes, l'un servant au remplissage des enceintes du groupe en blocs à isoler 1, l'autre au vidage des enceintes de ce groupe en blocs isolés 1.

Ces bras robotisés peuvent être des robots cinq axes pouvant être commandés via l'automate.

Dans l'exemple de la figure 1 où l'on a deux groupes d'enceintes 4a, 4b, 4c, 4d, quatre bras robotisés, deux bras robotisés étant attribués à un premier groupe d'enceintes et deux autres bras robotisés étant attribués à un second groupe d'enceintes.

Chaque bras robotisé 23a est dédié au chargement / remplissage d'enceintes et placé entre un tapis roulant de chargement 21 qui lui correspond et un groupe d'enceintes qui lui correspond. Ainsi, à chaque bras robotisé de chargement 23a correspond un tapis roulant 21 de chargement. Comme on a deux groupes d'enceinte, on a deux bras robotisés 23a dédiés au chargement et deux tapis roulants 21 de chargement.

De manière similaire, chaque bras robotisé 23b dédié au déchargement / vidage d'enceintes étant placé entre un tapis roulant de déchargement 22 qui lui correspond et un groupe d'enceintes qui lui correspond.

Ainsi, à chaque bras robotisé de déchargement 23b correspond un tapis roulant 22 de déchargement. Comme on a deux groupes d'enceinte, on a deux bras robotisés 23b dédiés au déchargement et deux tapis roulants 22 de déchargement.

La chaîne de production 0 comporte plusieurs lignes de productions, en l'occurrence deux lignes, parallèles entre elles et comportant chacune :
- un tapis de chargement 21 pour amener des palettes P pleines de blocs à isoler, sur chacune de ces palettes sont disposés sur plusieurs niveaux de blocs, chaque niveau de blocs étant formé de plusieurs rangées de blocs alignés ;
- un groupe d'enceintes assemblées l'une contre l'autre de manière à pouvoir pivoter ensemble selon un axe de pivotement 9a, propre à ce groupe d'enceintes et sensiblement horizontal, les ouvertures de ces enceintes étant diamétralement opposées par rapport à cet axe de pivotement 9a ;
- un bras robotisé de chargement 23a pour déplacer les blocs à isoler 1 des palettes P acheminées via le tapis de chargement 21 vers l'enceinte de la ligne de production qui est positionnée pour que son ouverture se trouve accessible par ce bras robotisé de chargement 23a (c'est-à-dire au-dessus de l'enceinte);
- un bras robotisé de déchargement 23b pour déplacer les blocs isolés 1 positionnés dans l'enceinte de la ligne de production dont l'ouverture se trouve au-dessus de l'enceinte pour être accessible par ce bras robotisé de déchargement 23b. Ce bras robotisé de déchargement achemine les blocs isolés 1 vers des palettes P se trouvant sur le tapis 22 de déchargement en rangeant ces blocs par niveau de blocs, chaque niveau étant composé de plusieurs rangs de blocs isolés.

Une ligne de production peut aussi comprendre :
- une pile 25 de palettes vides formée par le robot de chargement 23a, ces palettes vides sont les palettes portées par le tapis de chargement 21 et vidées par le bras robotisé de chargement 23a ; et éventuellement
- une pile 26 de palettes vides disposées pour être déplacées par le bras robotisé de déchargement 23b vers le tapis de déchargement 22 pour pouvoir y remplir ces palettes de niveaux de blocs isolés, chaque niveau de blocs isolés étant composé de plusieurs rangs de blocs isolés.

L'invention n'est pas limitée aux exemples décrits précédemment et peut comporter d'autres modes de réalisation non décrits.

En particulier, bien qu'il a été décrit que les buses d'injection 13 sont mobiles à l'intérieure de l'enceinte pour y introduire de la mousse dans différents évidements, il est aussi possible que les buses soient placées à poste fixe sur une des parois périphériques de l'enceinte. Dans ce cas, les buses sont disposées pour que certaines au moins des buses se trouvent en face d'évidements correspondants. Selon ce mode, on peut avoir autant de buses que d'évidement présent dans la chambre. On peut aussi faire en sorte que des canaux d'expansion de mousse, ouverts latéralement vers l'enceinte, soient formés sur des parois périphériques de l'enceinte pour permettre de faire passer de la mousse expansive d'un évidement de bloc à un autre évidement de bloc via le canal d'expansion. En ce cas les canaux peuvent être prévus pour être non adhérents avec la mousse. Les parois de ces canaux peuvent aussi être prévues pour être déformables pour qu'avant solidification de la mousse dans ces canaux ils puissent être déformés pour évacuer la mousse se trouvant dans ces canaux. Pour cela, on peut prévoir que la paroi périphérique présente une face externe étanche déformable et qu'en arrière de cette face externe se trouvent des chambres qui lorsqu'elles reçoivent un fluide sous pression écartent la face externe étanche vers l'intérieur de l'enceinte et qui lorsqu'elles sont mises en dépression plaquent la face externe étanche à l'intérieur des chambres de la paroi périphérique pour ainsi définir des canaux ouverts en direction de l'intérieur de l'enceinte. Un tel canal à la forme d'une goulotte ouverte latéralement vers l'enceinte. Ainsi, tant que la mousse n'est pas encore solidifiée, on laisse les canaux formés ce qui permet le passage de mousse entre les évidements via les canaux. Une fois que l'on considère que la mousse est correctement répartie entre les évidements, on pressurise alors les chambres formées dans la paroi périphérique de l'enceinte, ce qui force les canaux en forme de goulotte à disparaitre, la mousse non encore solidifiée est alors évacuée hors des canaux vers les évidements des blocs. La paroi périphérique est alors maintenue exempte de canaux tant que la mousse n'est pas solidifiée. Avec ce mode de réalisation, les encoches 20 des blocs et les encoches 20a et 20b des plaques de séparation peuvent être supprimées. Par ailleurs, on peut éventuellement rectifier les blocs pour obtenir des surfaces parfaitement planes et exemptes de mousse.

## Revendications

1. Procédé de production de blocs isolés (1) pour la construction de mur, le procédé comprenant :
- la fabrication de blocs (1), chaque bloc ainsi fabriqué comportant des parois (1a, 1b) entre lesquelles se trouve au moins un évidement interne (2) au bloc (1); le procédé de production de blocs étant **caractérisé en ce qu'**il comprend :
- la disposition des blocs (1) dans une première enceinte (4a) comportant des parois périphériques (14) dont des faces internes (15) sont orientées vers l'intérieur de cette première enceinte (4a) pour venir en contact contre des faces externes (16) des blocs (1) se trouvant dans cette première enceinte (4a), certaines au moins de ces faces internes (15) des parois périphériques (14) de la première enceinte (4a) comportent un premier matériau élastique et compressible (17) qui lorsque compressé contre une face externe (16) d'un bloc (1) s'oppose au passage de mousse expansive (3) entre cette face interne de paroi périphérique (15) de la première enceinte (4a) et la face externe (16) du bloc (1) contre laquelle ce premier matériau élastique (17) est compressé, ce matériau élastique (17) étant formé d'une couche de matériau élastomère revêtue d'une couche de parement (18) placée en vis-à-vis de l'intérieur de cette première enceinte (4a), cette couche de parement (18) étant en une matière sur laquelle une mousse isolante expansive (3) n'adhère pas ;
- l'introduction de ladite mousse isolante expansive (3) dans certains au moins des évidements internes (2) des blocs (1) disposés à l'intérieur de ladite première enceinte (4a) ; et
- l'application d'efforts de compression (F1) par l'intermédiaire de premiers moyens de compression (5) reliés à la première enceinte (4a) sur certaines au moins des parois (1a, 1b) des blocs (1), ces efforts de compression (F1) sont orientés pour s'opposer à des efforts d'expansion (F2) exercés contre des parois des blocs par la mousse isolante expansive (3).

2. Procédé de production de blocs isolés (1) pour la construction de mur selon la revendication 1, comprenant en outre l'aspiration de gaz se trouvant à l'intérieur desdits évidements internes (2) aux blocs (1) où se trouve la mousse isolante expansive (3) afin de favoriser l'expansion de la mousse isolante (3) dans les évidements internes (2) aux blocs (1) où se trouve la mousse isolante.

3. Procédé de production de blocs isolés selon la revendication 2, dans lequel l'aspiration de gaz se trouvant à l'intérieur desdits évidements internes (2) aux blocs (1) est réalisée en dépressurisant ladite première enceinte (4a) par rapport à une pression atmosphérique ambiante.

4. Procédé de production de blocs isolés selon les revendications 2 et 3 combinées, dans lequel les efforts de compression (F1) appliqués sur certaines au moins des parois (1a, 1b) des blocs (1) sont appliqués à l'aide de vérins (5) fixés sur des parois mobiles (6) de ladite première enceinte.

5. Procédé de production de blocs isolés selon l'une quelconque des revendications 1 à 4, dans lequel les blocs (1) sont fabriqués par moulage de béton.

6. Chaîne de production (0) de blocs isolés (1) pour la construction de mur, **caractérisée en ce que** la chaîne (0) comprend :
- au moins une première enceinte (4a) adaptée à recevoir des blocs (1), chacun de ces blocs (1) comportant des parois (1a, 1b) entre lesquelles se trouve au moins un évidement interne (2) au bloc (1) ;
- des premiers moyens d'injection (7) adaptés à introduire une mousse isolante expansive (3) dans certains au moins des évidements internes (2) de blocs (1) disposés à l'intérieur de ladite première enceinte (4a) ;
- des premiers moyens de compression (5) reliés à la première enceinte (4a) et agencés pour pouvoir comprimer des parois (1a, 1b) de blocs (1) disposés à l'intérieur de ladite première enceinte (4a) ;
la première enceinte (4a) comportant des parois périphériques (14) dont des faces internes (15) sont orientées vers l'intérieur de cette première enceinte (4a) pour venir en contact contre des faces externes (16) de blocs (1) se trouvant dans cette première enceinte (4a), certaines au moins de ces faces internes (15) des parois périphériques (14) de la première enceinte (4a) comportent un premier matériau élastique et compressible (17) qui lorsque compressé contre une face externe (16) d'un bloc (1) s'oppose au passage de mousse expansive (3) entre cette face interne de paroi périphérique (15) de la première enceinte (4a) et la face externe (16) du bloc (1) contre laquelle ce premier matériau élastique (17) est compressé, ce matériau élastique (17) étant formé d'une couche de matériau élastomère revêtue d'une couche de parement (18) placée en vis-à-vis de l'intérieur de cette première enceinte (4a), cette couche de parement (18) étant en une matière sur laquelle la mousse isolante expansive (3) n'adhère pas.

7. Chaîne de production (0) selon la revendication 6, dans laquelle ladite au moins une première enceinte est adaptée à être dépressurisée par rapport à une pression atmosphérique ambiante, cette enceinte (4a) comprenant en outre des premiers moyens d'aspiration (8) de gaz adaptés à aspirer des gaz se trouvant à l'intérieur de ladite première enceinte (4a).

8. Chaîne (0) selon l'une quelconque des revendications 6 ou 7, comportant un premier axe de pivotement préférentiellement sensiblement horizontal (9a) relié à ladite première enceinte (4a) de manière à ce que cette première enceinte (4a) puisse être pivotée selon ce premier axe de pivotement (9a).

9. Chaîne selon la revendication 8, comprenant une deuxième enceinte (4b) adaptée à être dépressurisée par rapport à une pression atmosphérique ambiante, cette deuxième enceinte (4b) étant également adaptée à recevoir des blocs (1), les première et deuxième enceintes (4a, 4b) étant montées à rotation selon ledit premier axe de pivotement (9a), ces première et deuxième enceintes (4a, 4b) formant un premier groupe d'enceintes ;
- dans une première configuration, le premier groupe d'enceintes est pivoté selon ledit premier axe de pivotement (9a) de manière à ce que la première enceinte soit placée au-dessus de la deuxième enceinte et de manière à permettre un accès à l'intérieur de cette première enceinte via une ouverture de cette première enceinte (4a) se trouvant alors au-dessus de cette deuxième enceinte ;
- dans une seconde configuration, le premier groupe d'enceintes est pivoté selon ledit premier axe de pivotement (9a) de manière à ce que la deuxième enceinte (4b) soit placée au-dessus de la première enceinte (4a) et de manière à permettre un accès à l'intérieur de cette deuxième enceinte (4b) via une ouverture de cette deuxième enceinte se trouvant alors au-dessus de cette première enceinte.

10. Chaîne selon l'une quelconque des revendications 6 à 9 combinée à la revendication 7, comportant une remorque (11) dotée de roues (12) et portant au moins :
- la première enceinte (4a) ;
- les premiers moyens d'injection (7) ; et
- les premiers moyens d'aspiration (8) de gaz adaptés à aspirer des gaz se trouvant à l'intérieur de ladite première enceinte (4a).

11. Chaîne selon les revendications 9 et 10 dans laquelle la remorque (11) porte également la deuxième enceinte (4b) et ledit premier axe de pivotement (9a).

12. Chaîne selon l'une quelconque des revendications 6 à 11, dans laquelle les premiers moyens d'injection (7) comportent des buses mobiles (13) à l'intérieur de la première enceinte (4a) pour y introduire depuis une zone interne supérieure de la première enceinte (4a) vers des évidements internes (2) de blocs placés en dessous de ladite zone interne supérieure, des composants chimiques séparés l'un de l'autre qui lorsque mélangés forment ladite mousse isolante expansive.

13. Chaîne selon l'une quelconque des revendications 6 à 12, dans laquelle la couche de parement (18) est en polyéthylène ou en PTFE.

## Patentansprüche

1. Verfahren zur Fertigung isolierter Blöcke (1) zur Wandkonstruktion, wobei das Verfahren umfasst:
- die Herstellung von Blöcken (1), wobei jeder so hergestellte Block Wände (1a, 1b) umfasst, zwischen denen mindestens eine innere Aussparung (2) vorhanden ist, die sich innerhalb des Blocks (1) befindet; wobei das Verfahren zur Fertigung von Blöcken **dadurch gekennzeichnet, ist, dass** es umfasst:
- die Anordnung der Blöcke (1) in einer ersten Einfassung (4a), die Umfangswände (14) umfasst, deren innere Flächen (15) in Richtung des Inneren dieser ersten Einfassung (4a) gerichtet sind, um mit äußeren Flächen (16) der Blöcke (1) in Kontakt zu kommen, die sich in dieser ersten Einfassung (4a) befinden, wobei zumindest einige dieser inneren Flächen (15) der Umfangswände (14) der ersten Einfassung (4a) ein erstes elastisches und komprimierbares Material (17) umfassen, das sich, wenn es gegen eine äußere Fläche (16) eines Blocks (1) zusammengedrückt wird, dem Durchtritt von Expansionsschaum (3) zwischen dieser inneren Fläche der Umfangswand (15) der ersten Einfassung (4a) und der äußeren Fläche (16) des Blocks (1) widersetzt, gegen die dieses erste elastische Material (17) zusammengedrückt wird, wobei dieses elastische Material (17) aus einer Schicht aus Elastomermaterial gebildet ist, die mit einer Verblendschicht (18) überdeckt ist, die gegenüber dem Inneren dieser ersten Einfassung (4a) platziert ist, wobei diese Verblendschicht (18) aus einem Material ist, auf dem ein isolierender Expansionsschaum (3) nicht haftet;
- das Einbringen des genannten isolierenden Expansionsschaums (3) in zumindest einige der inneren Aussparungen (2) der Blöcke (1), die im Inneren der genannten ersten Einfassung (4a) angeordnet sind; und
- das Aufbringen von Kompressionskräften (F1) durch erste Kompressionsmittel (5), die mit der ersten Einfassung (4a) verbunden sind, auf zumindest einige der Wände (1a, 1b) der Blöcke (1), wobei diese Kompressionskräfte (F1) so gerichtet sind, dass sie sich Expansionskräften (F2), die von dem isolierenden Expansionsschaum (3) auf die Wände der Blöcke ausgeübt werden, widersetzen.

2. Verfahren zur Fertigung isolierter Blöcke (1) zur Wandkonstruktion nach Anspruch 1, ferner umfassend das Ansaugen von Gas, das im Inneren der genannten inneren Aussparungen (2) der Blöcke (1) vorhanden ist, in denen sich der isolierende Expansionsschaum (3) befindet, um so die Expansion des isolierenden Schaums (3) in den inneren Aussparungen (2) der Blöcke (1), in denen der isolierende Schaum vorhanden ist, zu begünstigen.

3. Verfahren zur Fertigung isolierter Blöcke nach Anspruch 2, bei dem das Ansaugen von Gas, das im Inneren der genannten inneren Aussparungen (2) vorhanden ist, die sich innerhalb der Blöcke (2) befinden, dadurch erfolgt, dass der Druck in der genannten ersten Einfassung (4a) in Bezug auf einen Umgebungsluftdruck reduziert wird.

4. Verfahren zur Fertigung isolierter Blöcke nach den Ansprüchen 2 und 3 in Kombination, bei dem die Kompressionskräfte (F1), die auf zumindest einige der Wände (1a, 1b) der Blöcke (1) aufgebracht werden, mittels Zylinder (5) aufgebracht werden, die an beweglichen Wänden (6) der genannten ersten Einfassung befestigt sind.

5. Verfahren zur Fertigung isolierter Blöcke (1) nach einem der Ansprüche 1 bis 4, bei dem die Blöcke (1) durch Betongießen hergestellt werden.

6. Fertigungsstraße (0) zur Fertigung isolierter Blöcke (1) zur Wandkonstruktion, **dadurch gekennzeichnet, dass** die Straße (0) umfasst:
- mindestens eine erste Einfassung (4a), die angepasst ist, um Blöcke (1) aufzunehmen, wobei jeder dieser Blöcke (1) Wände (1a, 1b) umfasst, zwischen denen mindestens eine innere Aussparung (2) vorhanden ist, die sich innerhalb des Blocks (2) befindet;
- erste Einspritzmittel (7), die angepasst sind, um einen isolierenden Expansionsschaum (3) in zumindest einige der inneren Aussparungen (2) der Blöcke (1) einzubringen, die im Inneren der genannten ersten Einfassung (4a) angeordnet sind;
- erste Kompressionsmittel (5), die mit der ersten Einfassung (4a) verbunden und ausgebildet sind, um Wände (1a, 1b) der Blöcke (1), die im Inneren der genannten ersten Einfassung (4a) angeordnet sind, zusammendrücken zu können;
wobei die erste Einfassung (4a) Umfangswände (14) umfasst, deren innere Flächen (15) in Richtung des Inneren dieser ersten Einfassung (4a) gerichtet sind, um mit äußeren Flächen (16) der Blöcke (1) in Kontakt zu kommen, die sich in dieser ersten Einfassung (4a) befinden, wobei zumindest einige dieser inneren Flächen (15) der Umfangswände (14) der ersten Einfassung (4a) ein elastisches und komprimierbares erstes Material (17) umfassen, das sich, wenn es gegen eine äußere Fläche (16) eines Blocks (1) zusammengedrückt wird, dem Durchtritt des Expansionsschaums (3) zwischen dieser inneren Fläche der Umfangswand (15) der ersten Einfassung (4a) und der äußeren Fläche (16) des Blocks (1) widersetzt, gegen den dieses elastische erste Material (17) zusammengedrückt wird, wobei dieses elastische Material (17) aus einer Schicht aus Elastomermaterial gebildet ist, die mit einer Verblendschicht (18) überdeckt ist, die gegenüber dem Inneren dieser ersten Einfassung (4a) platziert ist, wobei diese Verblendschicht (18) aus einem Material ist, auf dem der isolierende Expansionsschaum (3) nicht haftet.

7. Fertigungsstraße (0) nach Anspruch 6, bei der die genannte mindestens eine erste Einfassung angepasst ist, dass der Druck darin in Bezug auf einen Umgebungsluftdruck reduziert ist, wobei diese Einfassung (4a) ferner erste Gasansaugmittel (8) umfasst, die angepasst sind, um im Inneren der genannten ersten Einfassung (4a) vorhandene Gase anzusaugen.

8. Straße (0) nach einem der Ansprüche 6 oder 7, umfassend eine vorzugsweise im Wesentlichen horizontale erste Schwenkachse (9a), die mit der genannten ersten Einfassung (4a) derart verbunden ist, dass diese erste Einfassung (4a) um diese erste Schwenkachse (9a) geschwenkt werden kann.

9. Straße nach Anspruch 8, umfassend eine zweite Einfassung (4b), die so angepasst ist, dass der Druck darin in Bezug auf einen Umgebungsluftdruck reduziert ist, wobei diese zweite Einfassung (4b) ferner angepasst ist, Blöcke (1) aufzunehmen, wobei die erste und zweite Einfassung (4a, 4b) drehbar um die genannte erste Schwenkachse (9a) gelagert sind, wobei diese erste und zweite Einfassung (4a, 4b) eine erste Gruppe von Einfassungen bilden;
- in einer ersten Konfiguration die erste Gruppe von Einfassungen um die genannte erste Schwenkachse (9a) derart geschwenkt wird, dass die erste Einfassung über der zweiten Einfassung platziert ist, und derart, dass ein Zugang ins Innere dieser ersten Einfassung über eine Öffnung dieser ersten Einfassung (4a), sich dann über dieser zweiten Einfassung befindet, ermöglicht ist;
- in einer zweiten Konfiguration die erste Gruppe von Einfassungen um die genannte erste Schwenkachse (9a) derart geschwenkt wird, dass die zweite Einfassung (4b) über der ersten Einfassung (4a) platziert ist, und derart, dass ein Zugang ins Innere dieser zweiten Einfassung (4b) über eine Öffnung dieser zweiten Einfassung (4b), die sich dann über dieser ersten Einfassung befindet, ermöglicht ist.

10. Straße nach einem der Ansprüche 6 bis 9, in Kombination mit Anspruch 7, umfassend einen Anhänger (11), der mit Rädern (12) versehen ist und mindestens trägt:
- die erste Einfassung (4a);
- die ersten Einspritzmittel (7); und
- die ersten Gasansaugmittel (8), die angepasst sind, die Gase anzusaugen, die im Inneren der genannten ersten Einfassung (4a) vorhanden sind.

11. Straße nach Anspruch 9 und 10, bei der der Anhänger (11) ferner die zweite Einfassung (4b) und die genannte erste Schwenkachse (9a) trägt.

12. Straße nach einem der Ansprüche 6 bis 11, bei der die ersten Einspritzmittel (7) bewegliche Düsen (13) im Inneren der ersten Einfassung (4a) umfassen, um dort von einer oberen inneren Zone der ersten Einfassung (4a) in Richtung der inneren Aussparungen (2) der Blöcke, die unter der genannten oberen inneren Zone platziert sind, voneinander getrennte chemische Komponenten einzubringen, die, wenn sie vermischt sind, den genannten isolierenden Expansionsschaum bilden.

13. Straße nach einem der Ansprüche 6 bis 12, bei der die Verblendschicht (18) aus Polyethylen oder aus PTFE ist.

## Claims

1. A method of producing insulating blocks (1) for wall-building, the method comprising:
• making blocks (1), each block made in this way having walls (1a, 1b) between which there is at least one recess (2) internal to the block (1); the method of producing insulating blocks being **characterized in that** it comprises:
• placing blocks (1) in a first enclosure (4a) having peripheral walls (14) with inside faces (15) facing towards the inside of the first enclosure (4a) in order to come into contact against the outside faces (16) of the blocs (1) to be found in the first enclosure (4a), at least some of the inside faces (15) of the peripheral walls (14) of the first enclosure (4a) comprising an elastic and compressible first material (17) that, when compressed against an outside face (16) of a block (1), opposes the passage of expanding foam (3) between the inside face of the peripheral wall (15) of the first enclosure (4a) and the outside face (16) of the block (1) against which the elastic first material (17) is compressed, the elastic material (17) being formed by a layer of elastomer material coated in a facing layer (18) placed facing the inside of the first enclosure (4a), the facing layer (18) being made of a material to which an expanding insulating foam (3) does not adhere;
• introducing said expanding insulating foam (3) in at least some of the internal recesses (2) of the blocks (1) arranged inside said first enclosure (4a); and
• using first compression means (5) connected to the first enclosure (4a) to apply compression forces (F1) to at least some of the walls (1a, 1b) of the blocks (1), the compression forces (F1) being oriented to oppose expansion forces (F2) exerted against the walls of the blocks by the expanding insulating foam (3).

2. A method of producing insulating blocks (1) for wall-building according to claim 1, further comprising sucking out gas that is to be found inside said recesses (2) internal to the blocks (1) in which the expanding insulating foam (3) is to be found so as to enhance the expansion of the insulating foam (3) in the recesses (2) internal to the blocks (1) in which the insulating foam is to be found.

3. A method of producing insulating blocks according to claim 2, wherein the gas that is to be found inside said recesses (2) internal to the blocks (1) is sucked out by reducing the pressure of said first enclosure (4a) relative to ambient atmospheric pressure.

4. A method of producing insulating blocks according to claims 2 and 3 combined, wherein the compression forces (F1) applied to at least some of the walls (1a, 1b) of the blocks (1) are applied using actuators (5) fastened to movable walls (6) of said first enclosure.

5. A method of producing insulating blocks according to any one of claims 1 to 4, wherein the blocks (1) are made by molding concrete.

6. A production line (0) for producing insulating blocks (1) for wall-building, the production line (0) being **characterized in that** it comprises:
• at least one first enclosure (4a) adapted to receive the blocks (1), each of the blocks (1) having walls (1a, 1b) between which there is at least one recess (2) internal to the block (1);
• first injection means (7) adapted to inject expanding insulating foam (3) into at least some of the recesses (2) internal to the blocks (1) arranged inside said first enclosure (4a);
• first compression means (5) connected to the first enclosure (4a) and arranged to be able to compress the walls (1a, 1b) of blocks (1) arranged inside said first enclosure (4a);
• the first enclosure (4a) having peripheral walls (14) with inside faces (15) facing towards the inside of the first enclosure (4a) in order to come into contact against the outside faces (16) of the blocs (1) to be found in the first enclosure (4a), at least some of the inside faces (15) of the peripheral walls (14) of the first enclosure (4a) comprising an elastic and compressible first material (17) that, when compressed against an outside face (16) of a block (1), opposes the passage of expanding foam (3) between the inside face of the peripheral wall (15) of the first enclosure (4a) and the outside face (16) of the block (1) against which the elastic first material (17) is compressed, the elastic material (17) being formed by a layer of elastomer material coated in a facing layer (18) placed facing the inside of the first enclosure (4a), the facing layer (18) being made of a material to which the expanding insulating foam (3) does not adhere.

7. A production line (0) according to claim 6, wherein said at least one first enclosure is adapted to have its pressure reduced relative to ambient atmospheric pressure, said enclosure (4a) also including first gas suction means (8) adapted to suck out the gas that is to be found inside said first enclosure (4a).

8. A line (0) according to claim 6 or claim 7, including a preferably-horizontal first pivot axis (9a) connected to said first enclosure (4a) in such a manner that the first enclosure (4a) can be pivoted about the first pivot axis (9a).

9. A line according to claim 8, including a second enclosure (4b) adapted to have its pressure reduced relative to ambient atmospheric pressure, the second enclosure (4b) also being adapted to receive the blocs (1), the first and second enclosures (4a, 4b) being rotatably mounted about said first pivot axis (9a), the first and second enclosures (4a, 4b) forming a first group of enclosures;
• in a first configuration, the first group of enclosures is pivoted about said first pivot axis (9a) in such a manner that the first enclosure is placed above the second enclosure and in such a manner as to give access to the inside of the first enclosure via an opening in said first enclosure (4a) that is then to be found above the second enclosure; and
• in a second configuration, the first group of enclosures is pivoted about said first pivot axis (9a) in such a manner that the second enclosure (4b) is placed above the first enclosure (4a) and in such a manner as to give access to the inside of the second enclosure (4b) via an opening in said second enclosure that is then to be found above the first enclosure.

10. A line according to any one of claims 6 to 9, combined with claim 7, including a trailer (11) provided with wheels (12) and carrying at least:
. the first enclosure (4a);
. the first injection means (7); and
. the first gas suction means (8) adapted to suck out the gas that is to be found inside said first enclosure (4a).

11. A line according to claims 9 and 10, wherein the trailer (11) also carries the second enclosure (4b) and said first pivot axis (9a).

12. A line according to any one of claims 6 to 11, wherein the first injection means (7) include nozzles (13) that are movable inside the first enclosure (4a) in order to introduce various mutually separate chemical components going from a top inside zone of the first enclosure (4a) towards the recesses (2) internal to blocs placed below said top inside zone, the chemical components, when mixed, forming said expanding insulating foam.

13. A line according to any one of claims 6 to 12, wherein the facing layer (18) is made of polyethylene or of PTFE.
